# EUROPÄISCHE PATENTSCHRIFT

(11) **EP 2 808 117 B1**
(45) Veröffentlichungstag und Bekanntmachung des Hinweises auf die Patenterteilung: **04.05.2016**
(21) Anmeldenummer: 13171348.9
(22) Anmeldetag: 11.06.2013
(51) Int. Cl.: B23K 9/173, B23K 9/23

(54) **Verfahren zum Herstellen einer Schweißverbindung zwischen einer hochfesten Aluminiumlegierung mit Kupferanteil und einem anderen Teil unter Verwendung von CMT-Schweissen**
Method of manufacturing a welded connection between a high strengh aluminium part containing copper and another part using the CMT welding process
Procédé de fabrication d'une liaison soudée entre une pièce en Aluminium à haute résistance contenant du cuivre et une autre pièce en utilisant le soudage CMT

(30) Priorität: 28.05.2013 EP 13169455
(43) Veröffentlichungstag der Anmeldung: 03.12.2014
(73) Patentinhaber: MAGNA STEYR Engineering AG & Co KG, 8041 Graz (AT)
(72) Erfinder: Karner, Werner, 8055 Graz (AT)
(74) Vertreter: Zangger, Bernd

(56) Entgegenhaltungen:
- CN-A- 102 049 591
- KR-A- 20120 031 857
- US-A1- 2010 001 133

## Beschreibung

Die vorliegende Erfindung betrifft ein Verfahren zum Herstellen einer Schweißverbindung zwischen einer hochfesten Aluminiumlegierung mit Kupferanteil als erstem Metall und einem zweiten Metall gemäß dem Oberbegriff des Anspruchs 1 (siehe, z.B, US 2010/0001133 A1).

### Stand der Technik

Für derartige hochfeste Aluminiumlegierungen, wie Legierungen der Gruppe 7075, ist bekannt, dass Schmelzschweißverfahren wie etwa Lichtbogenschweißen aufgrund des Kupfergehalts in den Legierungen nicht erfolgreich angewendet werden können. Daher werden üblicherweise aufwändigere Verbindungsverfahren für diese Metalle eingesetzt.

Beispielsweise offenbart die US 5769306 für derartige Aluminiumlegierungen ein spezielles Reibschweißverfahren.

Die JPH 1147959 A offenbart für hochfeste Aluminiumlegierungen das Rührreibschweißen.

Insbesondere im Fahrzeugbau wäre es wünschenswert durch Verbindung von beispielsweise Stahl und hochfestem Aluminium leichtere Karosserien herstellen zu können und schwerere Stahlteile durch hochfeste Aluminiumteile zu ersetzten. Diese hochfesten Aluminiumlegierungen, wie insbesondere 7075er Aluminiumlegierungen, werden bisher vorwiegend im Flugzeugbau eingesetzt, und werden dort genietet - daher tritt das Problem der mangelnden Schweißbarkeit im Flugzeugbau weniger zu Tage.

Die US 2010/0001133 A1 offenbart ein Verfahren zum Schweißen einer Aluminiumlegierung mit einer Titanlegierung und insbesondere ein CMT-Schweißen von Aluminiumlegierungen 2x98.

Es ist eine Aufgabe der Erfindung, die Möglichkeit zu schaffen, diese hochfesten Aluminiumlegierungen beispielsweise auch im Kraftfahrzeugbau einzusetzen, und somit insbesondere die Fahrzeuge leichter zu machen und eine Anbindungsmöglichkeit an eventuell vorhandene Stahlteile zu schaffen.

### Beschreibung der Erfindung

Es ist eine Aufgabe der Erfindung, ein Verfahren zum Herstellen einer Schweißverbindung zwischen einer hochfesten Aluminiumlegierung mit Kupferanteil als erstem Metall und einem zweiten Metall anzugeben, dass einfach anzuwenden ist und eine zuverlässige Verbindung herstellt.

Die Lösung der Aufgabe erfolgt durch ein Verfahren zum Herstellen einer Schweißverbindung zwischen einer hochfesten Aluminiumlegierung mit Kupferanteil als erstem Metall und einem zweiten Metall gemäß Anspruch 1, wobei die Schweißverbindung durch CMT-Schweißen hergestellt wird, wobei die hochfeste Aluminiumlegierung mit Kupferanteil des ersten Metalls eine 7075 Aluminiumlegierung ist oder eine 7020 Aluminiumlegierung ist, wobei für das CMT-Schweißen ein Schweißdraht verwendet wird, der eine Aluminiumlegierung ist, umfassend die Legierungsanteile Si < 0,5%, Fe < 0,7%, Cu < 0,2%, Mn 0,2-2%, Mg 1,0-8,0%, Cr < 0,4%, Ti < 0,3%, Zn < 0,4%, Zr 0,01-0,4%.

CMT (Cold Metal Transfer) Schweißen ist ein von der Firma Fronius entwickeltes Lichtbogenschweißverfahren. Erfindungsgemäß hat sich überraschenderweise gezeigt, dass CMT-Schweißen, obwohl es ein Schmelzschweißverfahren ist, bei geeigneter Anwendung zum Schweißen von hochfesten Aluminiumlegierungen mit Kupferanteil genutzt werden kann. CMT-Schweißen ist hier nicht auf Schweißen mit Gleichstrom beschränkt, sondern es ist darunter auch Schweißen mit Wechselstrom zu verstehen, wie zum Beispiel "CMT Advanced" der Firma Fronius.

Erfindungsgemäß umfasst die Aluminiumlegierung des Schweißdrahtes die Legierungsanteile Si < 0,5%, Fe < 0,7%, Cu < 0,2%, Mn 0,2-2%, Mg 1,0-8,0%, Cr < 0,4%, Ti < 0,3%, Zn < 0,4%, Zr 0,01-0,4%.

Weiterbildungen der Erfindung sind in den abhängigen Ansprüchen, der Beschreibung sowie den beigefügten Zeichnungen angegeben.

Vorzugsweise ist die hochfeste Aluminiumlegierung mit Kupferanteil eine 7075 Aluminiumlegierung, wodurch die sonst günstigen Eigenschaften dieser Legierung für Bauteile genützt werden können, die dennoch einfach zu schweißen sind.

Die hochfeste Aluminiumlegierung des ersten Metalls kann auch eine 7020 Aluminiumlegierung sein.

Das zweite Metall kann eine Aluminiumlegierung sein, insbesondere kann auch das zweite Metall eine hochfeste Aluminiumlegierung ohne Kupferanteil sein.

Bevorzugt ist das zweite Metall eine 7075 Aluminiumlegierung oder eine 7020 Aluminiumlegierung.

Das zweite Metall kann auch ein herkömmliches Stahlblech sein, sodass eine erfindungsgemäße Verbindung beispielsweise zwischen einer 7075er Aluminiumlegierung und einem herkömmlichen Stahlblech hergestellt werden kann. Hierzu wird das Stahlblech für gewöhnlich zuvor verzinkt.

Bevorzugt wird für das CMT-Schweißen eine CMT-Schweißmaschine mit einer Brennerstellung von 5 bis 15 Grad stechend verwendet.

Bevorzugt wird für das CMT-Schweißen eine Schweißgeschwindigkeit von 0,05 bis 1 m/min verwendet.

Das erste Metall und / oder das zweite Metall kann ein Blech sein, insbesondere mit etwa max. 4 mm Blechstärke. Unter "Blech" werden sich flächig erstreckende aber im Wesentlichen gleich dicke Bauteile verstanden. Erfindungsgemäß können flächige Rohlinge aus 7075er Material, ähnlich Blechplatten, mit 7075er oder 7020er oder anderen Aluminiumlegierungen oder Stahlblechen als zweites Metall zusammengeschweißt und anschließend geformt werden um ein Strukturbauteil, insbesondere für den Fahrzeugbau, zu erhalten.

Besonders bevorzugt wird für das CMT-Schweißen ein Schweißdraht verwendet, der 1,2 mm Durchmesser aufweist.

Besonders bevorzugt wird für das CMT-Schweißen ein Schweißdraht verwendet, der eine Aluminiumlegierung ist, umfassend die Legierungsanteile Si 0,2%, Fe 0,35%, Cu 0,02%, Mn 1,5%, Mg 5,5%, Cr 0,15%, Ti 0,1%, Zn 0,2%, Zr 0,25%.

Die Erfindung ermöglicht das Herstellen einer Schweißverbindung zwischen einer hochfesten Aluminiumlegierung mit Kupferanteil als erstem Metall und einem zweiten Metall, auf einfache und zuverlässige Weise.

## Patentansprüche

1. Verfahren zum Herstellen einer Schweißverbindung zwischen einer hochfesten Aluminiumlegierung mit Kupferanteil als erstem Metall und einem zweiten Metall, wobei die Schweißverbindung durch 'Cold Metal Transfer' (CMT)-Schweißen hergestellt wird,
**dadurch gekennzeichnet, dass** die hochfeste Aluminiumlegierung mit Kupferanteil des ersten Metalls eine 7075 Aluminiumlegierung ist oder eine 7020 Aluminiumlegierung ist, wobei für das CMT-Schweißen ein Schweißdraht verwendet wird, der eine Aluminiumlegierung ist, umfassend die Legierungsanteile Si < 0,5%, Fe < 0,7%, Cu < 0,2%, Mn 0,2-2%, Mg 1,0-8,0%, Cr < 0,4%, Ti < 0,3%, Zn < 0,4%, Zr 0,01-0,4%.

2. Verfahren nach Anspruch 1,
**dadurch gekennzeichnet,**
**dass** das zweite Metall eine Aluminiumlegierung ist und insbesondere eine hochfeste Aluminiumlegierung ohne Kupferanteil.

3. Verfahren nach Anspruch 1,
**dadurch gekennzeichnet,**
**dass** das zweite Metall eine 7075 Aluminiumlegierung ist oder dass das zweite Metall eine 7020 Aluminiumlegierung ist.

4. Verfahren nach Anspruch 1,
**dadurch gekennzeichnet,**
**dass** das zweite Metall ein herkömmliches Stahlblech ist.

5. Verfahren nach einem der vorhergehenden Ansprüche, **dadurch gekennzeichnet, dass** für das 'Cold Metal Transfer' (CMT)-Schweißen eine Brennerstellung von 5 bis 15 Grad stechend verwendet wird.

6. Verfahren nach einem der vorhergehenden Ansprüche, **dadurch gekennzeichnet, dass** für das CMT-Schweißen eine Schweißgeschwindigkeit von 0,05 bis 1 m/min verwendet wird.

7. Verfahren nach einem der vorhergehenden Ansprüche, **dadurch gekennzeichnet, dass** für das 'Cold Metal Transfer' (CMT)-Schweißen ein Schweißdraht verwendet wird, der 1,2 mm Durchmesser aufweist.

8. Verfahren nach einem der vorhergehenden Ansprüche, **dadurch gekennzeichnet, dass** das erste und / oder das zweite Metall ein Blech ist, insbesondere mit etwa max. 4 mm Blechstärke.

9. Verfahren nach einem der vorhergehenden Ansprüche, **dadurch gekennzeichnet, dass** für das 'Cold Metal Transfer' (CMT)-Schweißen ein Schweißdraht verwendet wird, der eine Aluminiumlegierung ist, umfassend die Legierungsanteile Si 0,2%, Fe 0,35%, Cu 0,02%, Mn 1,5%, Mg 5,5%, Cr 0,15%, Ti 0,1%, Zn 0,2%, Zr 0,25%.

## Claims

1. Process for producing a welded joint between a high-strength aluminium alloy with a copper proportion as a first metal and a second metal, wherein the welded joint is produced by Cold Metal Transfer (CMT) welding,
**characterized in that** the high-strength aluminium alloy with the copper proportion of the first metal is a 7075 aluminium alloy or is a 7020 aluminium alloy, wherein a welding wire which is an aluminium alloy comprising the alloying proportions Si < 0.5%, Fe < 0.7%, Cu < 0.2%, Mn 0.2-2%, Mg 1.0-8.0%, Cr < 0.4%, Ti < 0.3%, Zn < 0.4%, Zr 0.01-0.4% is used for the CMT welding.

2. Process according to Claim 1,
**characterized in that** the second metal is an aluminium alloy and in particular a high-strength aluminium alloy without a copper proportion.

3. Process according to Claim 1,
**characterized in that** the second metal is a 7075 aluminium alloy or **in that** the second metal is a 7020 aluminium alloy.

4. Process according to Claim 1,
**characterized in that** the second metal is a conventional steel sheet.

5. Process according to one of the preceding claims, **characterized in that** a torch position at a pushing angle of 5 to 15 degrees is used for the Cold Metal Transfer (CMT) welding.

6. Process according to one of the preceding claims, **characterized in that** a welding speed of 0.05 to 1 m/min is used for the CMT welding.

7. Process according to one of the preceding claims, **characterized in that** a welding wire having a diameter of 1.2 mm is used for the Cold Metal Transfer (CMT) welding.

8. Process according to one of the preceding claims, **characterized in that** the first and/or the second metal is a metal sheet, in particular with a metal sheet thickness of approximately max. 4 mm.

9. Process according to one of the preceding claims, **characterized in that** a welding wire which is an aluminium alloy comprising the alloying proportions Si 0.2%, Fe 0.35%, Cu 0.02%, Mn 1.5%, Mg 5.5%, Cr 0.15%, Ti 0.1%, Zn 0.2%, Zr 0.25% is used for the Cold Metal Transfer (CMT) welding.

## Revendications

1. Procédé de fabrication d'une liaison soudée entre un alliage d'aluminium à haute résistance contenant une proportion de cuivre en tant que premier métal et un second métal, la liaison soudée étant fabriquée par soudage CMT (Cold Metal Transfer),
**caractérisé en ce que** l'alliage d'aluminium à haute résistance contenant une proportion de cuivre du premier métal est un alliage d'aluminium 7075 ou un alliage d'aluminium 7020, un fil d'apport étant utilisé pour le soudage CMT, qui est un alliage d'aluminium, comprenant les proportions d'alliage Si < 0,5 %, Fe < 0, 7 %, Cu < 0, 2 %, Mn 0, 2 à 2 %, Mg 1, 0 à 8, 0 %, Cr < 0,4 %, Ti < 0,3 %, Zn < 0,4 %, Zr 0,01 à 0,4 %.

2. Procédé selon la revendication 1, **caractérisé en ce que** le second métal est un alliage d'aluminium et notamment un alliage d'aluminium à résistance élevée sans proportion de cuivre.

3. Procédé selon la revendication 1, **caractérisé en ce que** le second métal est un alliage d'aluminium 7075 ou **en ce que** le second métal est un alliage d'aluminium 7020.

4. Procédé selon la revendication 1, **caractérisé en ce que** le second métal est un tôle en acier usuelle.

5. Procédé selon l'une quelconque des revendications précédentes, **caractérisé en ce qu'**une position du brûleur de 5 à 15 degrés aigus est utilisée pour le soudage CMT (Cold Metal Transfer).

6. Procédé selon l'une quelconque des revendications précédentes, **caractérisé en ce qu'**une vitesse de soudage de 0,05 à 1 m/minute est utilisée pour le soudage CMT.

7. Procédé selon l'une quelconque des revendications précédentes, **caractérisé en ce qu'**un fil d'apport d'un diamètre de 1,2 mm est utilisé pour le soudage CMT (Cold Metal Transfer).

8. Procédé selon l'une quelconque des revendications précédentes, **caractérisé en ce que** le premier et/ou le second métal est une tôle, notamment d'une épaisseur de tôle d'environ au plus 4 mm.

9. Procédé selon l'une quelconque des revendications précédentes, **caractérisé en ce qu'**un fil d'apport qui est un alliage d'aluminium comprenant les proportions d'alliage Si 0,2 %, Fe 0,35 %, Cu 0,02 %, Mn 1,5 %, Mg 5,5 %, Cr 0,15 %, Ti 0,1 %, Zn 0,2 %, Zr 0,25 % est utilisé pour le soudage CMT (Cold Metal Transfer).
